(19) **Europäisches Patentamt / European Patent Office / Office européen des brevets**

(11) **EP 2 623 309 A1**

(12) # EUROPEAN PATENT APPLICATION
published in accordance with Art. 153(4) EPC

(43) Date of publication:
07.08.2013 Bulletin 2013/32

(51) Int Cl.:
*B32B 5/24* (2006.01)      *B32B 27/32* (2006.01)
*H01M 2/16* (2006.01)

(21) Application number: 11829271.3

(22) Date of filing: 29.09.2011

(86) International application number:
PCT/JP2011/072367

(87) International publication number:
WO 2012/043718 (05.04.2012 Gazette 2012/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 01.10.2010 JP 2010223764

(71) Applicant: Mitsubishi Plastics, Inc.
Tokyo 100-8252 (JP)

(72) Inventor: NEMOTO, Tomoyuki
Nagahama-shi
Shiga 526-8660 (JP)

(74) Representative: Hayes, Adrian Chetwynd et al
Boult Wade Tennant
Verulam Gardens
70 Gray's Inn Road
GB-London WC1X 8BT (GB)

(54) **LAMINATED POROUS FILM, SEPARATOR FOR BATTERY, AND BATTERY**

(57) The purpose is to provide a laminated porous film having shutdown characteristics, which are important in terms of ensuring safety, while also having excellent air permeation performance, which contributes to electrical performance, when used a separator for a battery. The present invention is a laminated porous film characterized by comprising: a porous film layer having a thickness of 10 um or more, the main component thereof being a thermoplastics resin composition having a crystal-melting peak temperature of 150-250 °C; and a nonwoven fiber layer having a fiber diameter of 1 um or less, the main component thereof being a thermoplastic resin composition having a crystal-melting peak temperature of 100 °C to less than 150 °C; the air permeability of the laminated porous film being 10-10,000s/100mL.

Fig. 3

**Description**

TECHNICAL FIELD

0001 The present invention relates to a laminated porous film which can be utilized as packing, hygiene, livestock, agricultural, building, and medical materials, a separation film, and a separator for a battery, and particularly relates to a laminated porous film which can be utilized as a separator for a nonaqueous electrolytic solution battery.

BACKGROUND ART

0002 A polymeric porous film having a large number of intercommunicable micropores is utilized in various fields. [2]For example, the polymeric porous film is utilized as separation films to produce ultrapure water, purify chemicals, and treat water; waterproof moisture-permeable films for use in clothes and sanitary materials; and separators for use in batteries. 0003 A secondary battery is widely used as the power source of OA (Office Automation), FA (Factory Automation), household electric appliances, and portable devices such as communication devices. A lithium-ion secondary battery has a favorable volumetric efficiency when it is mounted on devices and allows the devices to be compact and lightweight. Therefore there is a large increase in the use of the portable devices in which the lithium-ion secondary battery is used.

Owing to research and development of a large secondary battery which have been made to use it in the field of load leveling, a UPS, an electric car and in many fields relating to energetic and environmental problems, a lithium-ion battery which is a kind of a nonaqueous electrolytic solution secondary battery has widely spread in its use because the lithium-ion battery has a large capacity, a high output, a high voltage, and an excellent long-term storage stability.

0004 The upper limit of the working voltage of the lithium-ion secondary battery is set to 4.1V to 4.2V. Because electrolysis occurs in an aqueous solution at such a high voltage, the aqueous solution cannot be used as an electrolytic solution. Therefore as an electrolytic solution capable of withstanding a high voltage, a so-called nonaqueous electrolytic solution in which an organic solvent is used as the electrolytic solution is adopted.

As a solvent for use in the nonaqueous electrolytic solution, an organic solvent having a high permittivity which allows a large number of lithium ions to be present therein is used. An organic carbonate ester such as polypropylene carbonate and ethylene carbonate is mainly used as the organic solvent having a high permittivity. As a supporting electrolyte serving as a lithium ion source in the solvent, an electrolyte such as lithium phosphate hexafluoride having a high reactivity is used by dissolving it in the solvent.

0005 The separator is interposed between the positive electrode of the lithium-ion secondary battery and its negative electrode to prevent an internal short circuit from occurring. Needless to say, the separator is demanded to play a role of electric insulation. In addition, the separator is required to have a porous structure so that air permeability of allowing lithium ions to pass therethrough and the function of diffusing and holding the electrolytic solution are imparted to the separator. To satisfy these demands, a porous film is used as the separator.

0006 Recently a separator provided with a proper shut-down property has come to be used. The shut-down property is the function of closing micropores of the separator for the battery when the battery has a high temperature (generally 100°C to 140°C). The lowest temperature of temperatures at which the micropores of the separator are closed is called a shut-down temperature. The shut-down property is an important property which contributes to the safety of the separator for battery in using the separator by incorporating it in the lithium-ion secondary battery. For example, when the battery is placed in a high-temperature state owing to the occurrence of abnormality, the micropores of the separator for the battery having the shut-down property are closed to shut off ion conduction inside the battery. Thereby it is possible to prevent the temperature inside the battery from rising. Because batteries have come to have a high capacity recently, the degree of importance for the safety of the battery has increased. Therefore it has become increasingly important that the separator has the shut-down property.

0007 As techniques of forming a film having the micropores of this kind, various techniques as shown below are proposed. For example, in a patent document 1, there is proposed a method of producing the separator for a battery in which the film consisting of polyethylene and polypropylene laminated one upon another is made porous by stretching the film at two stages in a uniaxial direction by changing temperature.

0008 In a patent document 2, there is proposed the composite sheet composed of the porous sheet consisting of the thermoplastic polymer having a melting point not less than 200°C and the nonwoven sheets not substantially having a stable melting point. The total of the number of the porous sheets and that of the nonwoven sheets laminated one upon another is not less than two.

0009 According to the disclosure made in a patent document 3, fine fibrous high-molecular-weight web (nonwoven cloth) produced by laminating fibers spun by carrying out an electrospinning method on the collector is used as the separator for the lithium secondary battery. According to the disclosure made in a patent document 4, to improve the strength of the above-described fine fibrous high-molecular-weight web, the nonwoven cloth produced by electrospinning fibers, consisting polyimide resin, whose diameters are not more than 1μm is used as the separator for a battery. In a patent document 5, there is proposed the separator for the lithium-ion secondary battery composed of the nonwoven cloth, produced by the electrospinning method, which is laminated on both surfaces of the net-like sheet.

PRIOR ART DOCUMENT

PATENT DOCUMENT

0010

Patent document 1: Japanese Patent No. 2883726
Patent document 2: Japanese Patent Application Laid-Open No. 2006-264029
Patent document 3: Japanese Patent Application Laid-Open No. 2002-249966
Patent document 4: Japanese Patent Application Laid-Open No. 2005-019026
Patent document 5: Japanese Patent Application Laid-Open No. 2006-092829

SUMMARY OF THE INVENTION

PROBLEMS TO BE SOLVED BY THE INVENTION

0011 Because batteries have come to have a high capacity recently, the degree of importance for the safety of the battery has increased. As the function contributing to the safety of the separator for the battery, the shut-down property (or hereinafter referred to as "SD property") is considered. When the battery has a high temperature (130°C to 150°C) state, the shut-down property has the function of closing the micropores of the separator for the battery and shutting off ion conduction inside the battery, thereby preventing the temperature inside the battery from rising. In using the porous film as the separator for the battery, it is necessary for the porous film to have the SD property.

MEANS FOR SOLVING THE PROBLEM

0012 The present invention provides a laminated porous film including a porous film layer (layer A) which contains a thermoplastic resin composition (a) having a crystalline melting peak temperature of not less than 150°C nor more than 250°C as a main component thereof and which has a thickness not less than 10μm and a nonwoven cloth layer (layer B) which contains a thermoplastic resin composition (b) having a crystalline melting peak temperature of not more than 100°C and less than 150°C as a main component thereof and which has a fiber diameter of not more than 1μm. The laminated porous film has an air permeability of 10 to 10000 seconds/100ml. 0013 It is preferable that the thermoplastic resin composition (b) is polyethylene resin.
0014 It is preferable that the thermoplastic resin composition (a) is polypropylene resin composition.
0015 It is preferable that the laminated porous film has a β activity.
0016 It is preferable that a β crystal nucleating agent is added to the thermoplastic resin composition (a).
0017 It is preferable that a thickness of the nonwoven cloth layer (layer B) is less than 10μm and that a shut-down temperature thereof is not less than 100°C nor more than 150°C.
0018 It is preferable that the nonwoven cloth layer (layer B) is formed on the porous film layer (layer A) by carrying out a nonwoven cloth production method (electrospinning method) in which a polymeric solution is prepared by dissolving the thermoplastic resin composition (b) in a solvent and thereafter the polymeric solution is spun into fibers by applying a voltage to the polymeric solution.
0019 The present invention provides a separator for a battery in which the above-described laminated porous film is used.
The present invention also provides a battery in which the above-described separator for a battery is incorporated.

EFFECT OF THE INVENTION

0020 The present invention is capable of providing the laminated porous film which has a shut-down property as well as a favorable air-permeable characteristic.

BRIEF DESCRIPTION OF THE DRWINGS

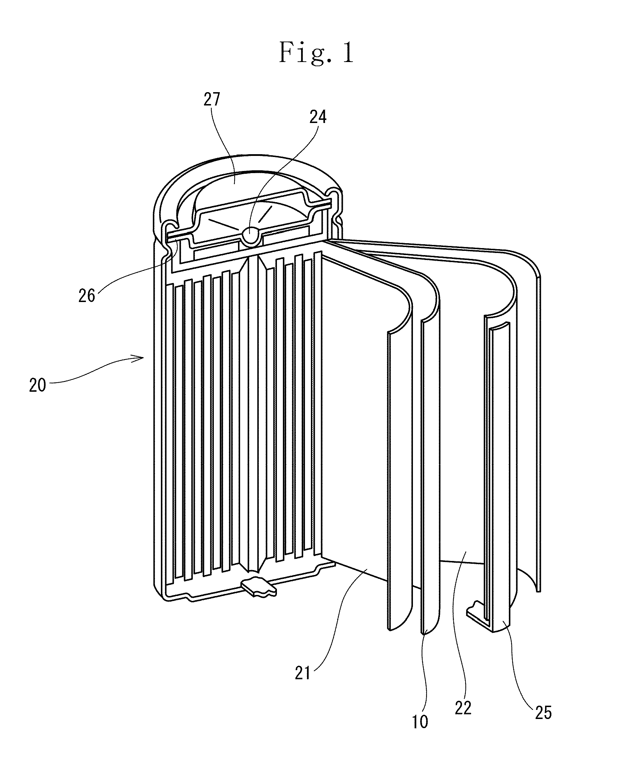

0021 Fig. 1 is a partially broken perspective view of a nonaqueous electrolytic solution battery accommodating a laminated porous film of the present invention as a separator therefor.

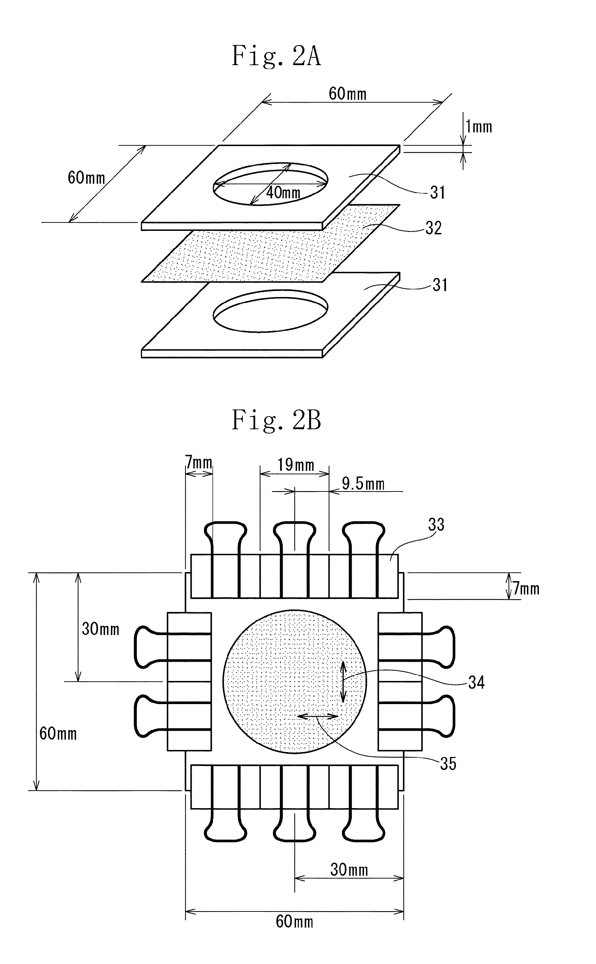

Fig. 2 explains a method of fixing the laminated porous film in measuring a shut-down temperature and a wide-angle X-ray diffraction.

Fig. 3 shows an image of a surface of a nonwoven cloth layer (layer B) observed by SEM.

## MODE FOR CARRYING OUT THE INVENTION

[Description of Terms]

0022 In the present invention, "nonwoven cloth" means a fibrous structure formed by using a mechanical means, a chemical means or a solvent or by combining these means with one another to bond fibers to one another or entwine them with one another or both bonding and entwining.

A "porous membrane" means a porous film formed by making a sheet porous by stretching the sheet and a sheet consisting of a foam body formed by using physical foaming or chemical foaming.

0023 Generally a "film" means a thin and flat product, the thickness of which is much smaller than its length and width and the maximum thickness of which is arbitrarily limited (Japanese Industrial Standards (JIS) K6900). The "film" is supplied in the form of a roll. Generally, by definition in JIS, a "sheet" means a flat product, the thickness of which is small relative to its length and width. But the boundary between the meaning of the sheet and that of the film is unclear. In the present invention, it is unnecessary to distinguish the sheet and the film from each other in wording. Thus "film" described in the present specification includes "sheet", and "sheet" described therein includes "film".

0024 In the present invention, unless specifically described, the expression of "main component" includes a case in which a resin composition contains components other than its main component in a range where the function of the main component is not inhibited. Although the content rate of the main component is not specified, the expression of the "main component" also means that the main component (when the main component consists of not less than two kinds of substances, the total of the substances) is contained in the resin composition at not less than 50 mass%, favorably not less than 70 mass%, and especially favorably not less than 80 mass% (including 100 mass%).

0025 Unless otherwise described, the description of "X to Y" (X, Y are any numerals) is intended to mean "not less than X nor more than Y" and also includes the meaning of "preferably, larger than X and smaller than Y".

The description of "not less than X" (X is any numeral) or "not more than Y" (Y is any numeral) includes the meaning of "preferably, larger than X or "preferably, smaller than Y". 0026 Each of components composing the laminated porous film of the present invention is described in detail below.

[Porous Film Layer (Layer A)]

0027 Initially a porous film layer (layer A) is described below.

<Thermoplastic Resin Composition (a)>

0028 The porous film layer (layer A) contains a thermoplastic resin composition (a) as its main component. In other words, the porous film layer (layer A) can be formed from a resin composition containing the thermoplastic resin composition (a) as its main component.

0029 The thermal property of the thermoplastic resin composition (a) composing the main component of the porous film layer (layer A) is important. Specifically it is important that the thermoplastic resin composition (a) has a peak value of its crystalline melting temperature (or crystalline melting peak temperature) in a temperature range of not less than 150°C nor more than 250°C. The peak value of the crystalline melting temperature of the thermoplastic resin composition (a) is favorably in a temperature range of 160°C to 250°C and more favorably in a temperature range of 165°C to 250°C.

The peak value of the crystalline melting temperature of the thermoplastic resin composition (a) is measured at a temperature increase speed of 10°C per minute in conformity to JIS K7121 (ISO 3146)by using a differential scanning calorimeter (DSC-7) produced by PerkinElmer Inc.

0030 The kind of the thermoplastic resin composition (a) which is the main component of the porous film layer (layer A) is not restricted to a specific one, provided that the thermoplastic resin composition (a) satisfies the above-described conditions of the peak value of the crystalline melting temperature. But considering that the laminated porous film is used as a separator for a battery, the porous film layer (layer A) is required to be chemical-resistant. From this standpoint, it is preferable to use one kind of resin selected from among polyolefin resins such as polypropylene, polymethylpentene, polyvinylidene fluoride, polyacrylonitrile, aramid, polyimide, polyamide imide, polyacrylonitrile, polyarylate, cellulose, polyazomethine, polyacetylene, and polypyrrole or mixtures each consisting of not less than two kinds selected from among these resins. Considering that the laminated porous film of the present invention is used as the separator for the battery, the porous film layer (layer A) is required to be chemical-resistant. From this standpoint, the polypropylene resin composition is especially preferable. The porous film layer (layer A) is required to be heat-resistant. From this standpoint, the polymethylpentene is especially preferable.

0031 As the polypropylene resin, homopolypropylene (propylene homopolymer) and block copolymers consisting of propylene and α-olefin such as ethylene, 1-butene, 1-pentene, 1-hexene, 1-heptene, 1-octene, 1-nonen or 1-decene are listed. In the case where the laminated porous film of the present invention is used as the separator for the battery, it is necessary that the laminated porous film has a high mechanical strength. From this standpoint, as the polypropylene resin, the homopolypropylene can be used more favorably than the above-described polypropylene resins.

0032 It is favorable to use the polypropylene resin in which an isotactic pentad fraction showing tacticity is 80 to 99%. It is more favorable to use the polypropylene resin in which the isotactic structure pentad fraction is 83 to 98% and most favorable to use the polypropylene resin in which the isotactic structure pentad fraction at 85 to 97%. When the isotactic pentad fraction is too low, there is a fear that the mechanical strength of the laminated porous film is low. On the other hand, the upper limit of the isotactic pentad fraction is specified by an upper limit value industrially obtained at the present time. But in the case where a resin having a higher regularity at an industrial level is developed in the future, there is a possibility that the upper limit of the isotactic pentad fraction is altered.

The isotactic pentad fraction means a three-dimensional structure in which all of five methyl groups which are side chains branched from a main chain consisting of a carbon-carbon bond composed of arbitrary continuous five propylene units are positioned in the same direction or the ratio of the three-dimensional structure. The attribution of a signal in a methyl group region conforms to A. Zambelli et al. (Macromol. 8,687, (1975)).

0033 It is favorable that Mw/Mn which is a parameter showing the molecular-weight distribution of the polypropylene resin is 1.5 to 10.0. It is more favorable to use the polypropylene resin having the Mw/Mn of 2.0 to 8.0 and most favorable to use the polypropylene resin having the Mw/Mn of 2.0 to 6.0. When the Mw/Mn is less than 1.5, there occurs a problem that extrusion moldability is low, and in addition it is often difficult to industrially produce the polypropylene resin. On the other hand, when the Mw/Mn exceeds 10.0, the amount of a low molecular-weight component becomes large. Thereby the mechanical strength of the obtained laminated porous film is liable to be low. The Mw/Mn is obtained by a GPC (gel permeation chromatography) method.

0034 The melt flow rate (MFR) of the polypropylene resin is set to favorably 0.5g to 15g/10 minutes and more favorably 1.0g to 10g/10 minutes. In the case where the MFR is less than 0.5g/10 minutes, there is a case in which the melt viscosity of the resin is high when the resin is molded, which may deteriorate the productivity. In the case where the MFR exceeds 15g/10 minutes, problems such as the shortage of the mechanical strength of the obtained laminated porous film are liable to occur in practical uses thereof. The MFR is measured in a condition where temperature is 230°C and a load is 2.16kg in accordance with JIS K7210.

0035 As the polypropylene resin, it is possible to use the following products commercially available: "NOVATEC PP" and "WINTEC" (produced by Japan Polypropylene Corporation), "Notio" and "TAFMER XR" (produced by Mitsui Chemicals, Inc.), "ZELAS" and "THERMORUN" (produced by Mitsubishi Chemical Corporation), "Sumitomo NOBLEN" and "TAFCELEN" (produced by Sumitomo Chemical Co., Ltd.), "PRIME TPO" (produced by Prime Polymer Corporation), "AdfleX", "Adsyl", and "HMS-PP (PF814)" (produced by SunAllomer Ltd.), and "Versify" and "INSPIRE" (produced by Dow Chemical Company).

(β activity)

0036 It is preferable that the laminated porous film of the present invention has a β activity.
The activity can be considered as an index indicating that the β crystal is generated in a membrane material before the membrane material is stretched. When the polypropylene resin of the membrane material generates the β crystal before the membrane material is stretched, micropores are formed in the membrane material by stretching it. Thereby it is possible to obtain the laminated porous film having an air-permeable characteristic.

0037 Whether the laminated porous film has the β crystal is determined according to whether the crystalline melting peak temperature derived from the β crystal of the polypropylene resin is detected by performing a differential thermal analysis of the laminated porous film with using a differential scanning calorimeter.
More specifically, after the temperature of the laminated porous sheet is raised from 25°C to 240°C at a scanning speed of 10°C/minute, the laminated porous sheet is allowed to stand for one minute. After the temperature of the laminated porous sheet is dropped from 240°C to 25°C at the scanning speed of 10°C/minute, the laminated porous sheet is allowed to stand for one minute. Thereafter the temperature of the laminated porous sheet is raised again from 25°C to 240°C at the scanning speed of 10°C/minute. In the case where the crystalline melting peak temperature (Tmβ) derived from the β crystal of the polypropylene resin is detected at this time, it is determined that the laminated porous sheet has the β activity.

0038 The degree of the β activity is computed based on an equation shown below by using a detected crystalline melting heat amount (ΔHma) derived from an α crystal of the polypropylene resin and a detected crystalline melting heat amount (ΔHmβ) derived from the β crystal thereof.

$$B\ activity\ degree\ (\%) = [\Delta Hm\beta/(\Delta Hm\beta + \Delta Hm\alpha)] \times 100$$

For example, in the case of the homopolypropylene, the $\beta$ activity degree can be computed from the crystalline melting heat amount ($\Delta Hm\beta$), derived from the $\beta$ crystal, which is detected mainly in a range not less than 145°C and less than 160°C and from the crystalline melting heat amount ($\Delta Hm\alpha$), derived from the $\alpha$ crystal, which is detected mainly in a range not less than 160°C nor more than 175°C. In the case of a random polypropylene in which 1 to 4 mol% of ethylene is copolymerized, the $\beta$ activity degree can be computed from the crystalline melting heat amount ($\Delta Hm\beta$), derived from the $\beta$ crystal, which is detected mainly in a range not less than 120°C and less than 140°C and from the crystalline melting heat amount ($\Delta Hm\alpha$), derived from the $\alpha$ crystal, which is detected mainly in a range not less than 140°C nor more than 165°C.

0039 It is preferable that the laminated porous film has the possible highest $\beta$ activity degree. Specifically the $\beta$ activity degree is favorably not less than 20%, more favorably not less than 40%, and especially favorably not less than 60%. When the laminated porous film has the $\beta$ activity degree not less than 20%, the polypropylene resin composition of the unstretched membrane material is capable of generating a large number of the $\beta$ crystal. In addition, a large number of pores fine and homogeneous can be formed by stretching the unstretched membrane material. Consequently it is possible to obtain the laminated porous film having a high mechanical strength and an excellent air-permeable performance.

Although the upper limit value of the $\beta$ activity degree is not limited to a specific value, the higher the $\beta$ activity degree is, the more effectively the above-described effect can be obtained. Therefore it is preferable that the upper limit of the $\beta$ activity degree is as close to 100% as possible.

0040 As methods for obtaining the $\beta$ activity, it is possible to list a method of molding the molten polypropylene resin at a high draft, a method of not adding a substance which accelerates the generation of the $\alpha$ crystal of the polypropylene resin to a resin composition, a method of adding the polypropylene resin so treated as to generate peroxide radical to a resin composition, as described in Japanese Patent No. 3739481, and a method of adding a $\beta$ crystal nucleating agent to a resin composition. Of these methods, it is preferable to obtain the $\beta$ activity by adding the $\beta$ crystal nucleating agent to the resin composition. By adding the $\beta$ crystal nucleating agent to the resin composition, it is possible to homogeneously and efficiently accelerate the generation of the $\beta$ crystal in the polypropylene resin and obtain the laminated porous film provided with a layer having the $\beta$ activity.

($\beta$ Crystal Nucleating Agent)

0041 The $\beta$ crystal nucleating agent to be used in the present invention is described below. The $\beta$ crystal nucleating agent is not restricted to a specific one so long as it increases the generation and growth of the $\beta$ crystal of the polypropylene resin. The $\beta$ crystal nucleating agent can be used by mixing not less than two kinds thereof with each other.

As the $\beta$ crystal nucleating agent, it is possible to list amide compounds; tetraoxaspiro compounds; quinacridones; iron oxides having a nano-scale size; alkaline metal salts or alkaline earth metal salts of carboxylic acids represented by 1,2-potassium hydroxystearate, magnesium benzoate, magnesium succinate, and magnesium phthalate; aromatic sulfonic acid compounds represented by sodium benzensulfonate and sodium naphthalene sulfonate; diesters or triesters of dibasic or tribasic carboxylic acids; phthalocyanine-based pigments represented by phthalocyanine blue; two-component compounds composed of a component A which is an organic dibasic acid and a component B which is an oxide, a hydroxide or a salt of one of the group IIA metals of the Periodic Table; and compositions consisting of a cyclic phosphorous compound and a magnesium

compound.

0042 As preferable examples of the $\beta$ crystal nucleating agent, "N Jester-NU-100" produced by New Japan Chemical Co., Ltd. is exemplified. As examples of the polypropylene resin to which the $\beta$ crystal nucleating agent is added, it is possible to list Polypropylene "Bepol B-022SP" produced by Aristech Inc., Polypropylene "Beta ($\beta$)-PPBE60-7032" produced by Borealis Inc., and Polypropylene "BNX BETAPP-LN" produced by Mayzo Inc. Other kinds of the $\beta$ crystal nucleating agent are described in Japanese Patent Application Laid-Open Nos. 2003-306585, 06-289566, and 09-194650.

0043 In the present invention, it is preferable to add the $\beta$ crystal nucleating agent to the polypropylene resin. It is necessary to appropriately adjust the mixing ratio of the $\beta$ crystal nucleating agent to be added to the polypropylene resin according to the kind of the $\beta$ crystal nucleating agent or the composition of the polypropylene resin. The mixing ratio of the $\beta$ crystal nucleating agent for 100 parts by mass of the polypropylene resin is favorably 0.0001 to 5.0 parts by mass, more favorably 0.01 to 3 parts by mass, and most favorably 0.1 to 3 part by mass. In the case where the mixing ratio of the β crystal nucleating agent for 100 parts by mass of the polypropylene resin is not less than 0.0001 parts by mass, it is possible to sufficiently generate and grow the β crystal of the polypropylene resin at a production time and obtain the laminated porous film having a desired air-permeable performance by performing a stretching operation. In the case where the mixing ratio of the β crystal nucleating agent for 100 parts by mass of the polypropylene resin is not more than 5.0 parts by mass, economic advantage can be obtained, and in addition, a trouble caused by bleed-out of the β crystal nucleating agent is unlikely to occur, which is preferable.

0044 To improve and adjust various properties of the polypropylene resin composition such as its antistatic property, heat-resistant property, slipping property, mechanical property, and the like to be used in this embodiment, it is possible to appropriately add various additives to the polypropylene resin composition as necessary so long as the addition of these additives to the polypropylene resin composition does not allow the properties of the obtained laminated porous film to depart from the gist of the present invention.

0045 As the additives, it is possible to list the following additives to be used for normal polyolefin: an antioxidant, a neutralizing agent, an ultraviolet ray absorber, an antifog agent, and a surface-active agent serving as an antistatic agent, a lubricant, an anti-blocking agent, an antibacterial agent, and a pigment. The kind of the additive is not limited to a specific one so long as the addition of these additives to the polypropylene resin composition does not allow the properties of the obtained laminated porous film to depart from the gist of the present invention.

0046 The structure of the porous film layer (layer A) is not limited to a specific one, provided that the porous film layer (layer A) has at least one layer containing the thermoplastic resin composition (a) whose crystalline melting peak temperature is 150°C to 250°C as its main component. Other layers may be laminated on the porous film layer within a range in which the other layers do not prevent the porous film layer (layer A) of the present invention from normally functioning. It is possible to exemplify a structure in which a strength-holding layer and a heat-resistant layer (resin layer having high melting temperature) are laminated on the porous film layer (layer A). [Nonwoven Cloth Layer (Layer B)]

0047 A nonwoven cloth layer (layer B) is described below.

<Diameter of Fiber>

0048 The diameters of fibers of the nonwoven cloth layer (layer B) are set to not more than 1μm. By setting the diameters of the fibers thereof to not more than 1μm, it is possible to obtain the thin nonwoven cloth layer (layer B) and produce a piece of nonwoven cloth which has very fine meshes and is dense, which is preferable. Thereby the obtained laminated porous film of the present invention is securely homogeneous, looks fine, and is allowed to have small variations in its physical properties.

From the above-described standpoint, the diameters of the fibers of the nonwoven cloth layer (layer B) are set to favorably not more than 0.7μm and more favorably not more than 0.5μm.

<Thermoplastic Resin Composition (b)>

0049 The nonwoven cloth layer (layer B) contains a thermoplastic resin composition (b) as its main component. In other words, the nonwoven cloth layer (layer B) can be formed from a resin composition containing the thermoplastic resin composition (b) as its main component.

0050 The thermal property of the thermoplastic resin composition (b) which is the main component of the nonwoven cloth layer (layer B) is important. Specifically it is important that the thermoplastic resin composition (b) has the peak value of its crystalline melting temperature (or crystalline melting peak temperature) in a temperature range of not less than 100°C and less than 150°C. The peak value of the crystalline melting temperature of the thermoplastic resin composition (a) is favorably in a range of 100°C to 145°C and more favorably in a range of 100°C to 140°C.

By setting the peak value of the crystalline melting temperature of the thermoplastic resin composition (b) to the above-described temperature range, micropores formed in the nonwoven cloth layer (layer B) are closed at a high temperature in the case where the laminated porous film is used as the separator for the battery. Thereby it is possible to impart a proper degree of the shut-down property to the nonwoven cloth layer (layer B).

The peak value of the crystalline melting temperature is measured by using the differential scanning calorimeter (DSC-7) produced by PerkinElmer Inc. at a temperature increase speed of 10°C/minute in conformity to JIS K7121 (ISO 3146).

0051 The kind of the thermoplastic resin (b) which is the main component of the nonwoven cloth layer (layer B) is not limited to a specific one, provided that the thermoplastic resin (b) satisfies the condition of the peak value of the crystalline melting temperature. But considering that the laminated porous film of the present invention is used as the separator for the battery, the nonwoven cloth layer (layer B) is required to be chemical-resistant. From this standpoint, it is preferable to use one resin selected from among polyethylene resin such as low-density polyethylene, high-density polyethylene, and linear low-density polyethylene; and polyolefin resin such as an ethylene vinyl acetate copolymer, polypropylene, polymethylpentene, and a mixed resin consisting of not less than two kinds of these resins.

The laminated porous film to be obtained is required to be chemical-resistant. Thus from this standpoint, the polyethylene resin is favorable, and the high-density polyethylene is more favorable. The laminated porous film to be obtained is required to have high mechanical properties. From this standpoint, the high-density polyethylene (ultra-high-molecular-weight polyethylene) having a high molecular weight is preferable.

<Porosity>

0052 The porosity of the porous film layer (layer A) is set to not less than 10%, favorably not less than 20%, and especially favorably not less than 30%. In the case where the porosity of the porous film layer is not less than 10%, pores of the porous film layer are allowed to be intercommunicable with one another to some extent. Thus the porous film layer (layer A) is capable of securely obtaining air-permeable performance (that is, air permeability can be numerically decreased). Therefore in the case where the laminated porous film is used as the separator for the battery, it is possible to decrease the electric resistance of the laminated porous film. Thus it is possible to preferably use the laminated porous film as the separator for the battery. On the other hand, regarding the upper limit of the porosity of the porous film layer (layer A), the porosity thereof is set to not more than 90%, favorably not more than 80%, and more favorably not more than 70%. In the case where the porosity of the porous film layer is not more than 90%, the obtained laminated porous film is allowed to securely obtain its strength to some extent. Thus in the case where the laminated porous film is used as the separator for the battery, the separator does not pose any problems in a practical use.

<Average Diameter of Pore>

0053 The average diameter of the porous film layer (layer A) is set to favorably not less than 0.001$\mu$m, more favorably not less than 0.05$\mu$m, and most favorably not less than 0.01$\mu$m. In the case where the average diameter of the porous film layer (layer A) is not less than 0.001$\mu$m, pores of the porous film layer are allowed to be intercommunicable with one another to some extent. Thus the porous film layer (layer A) is capable of securely obtaining the air-permeable performance (that is, air permeability can be numerically decreased). Therefore in the case where the laminated porous film is used as the separator for the battery, it is possible to decrease the electric resistance of the laminated porous film. Thus it is possible to preferably use the laminated porous film as the separator for the battery. On the other hand, regarding the upper limit of the average diameter of the porous film layer, the average diameter thereof is set to not more than 1$\mu$m, favorably not more than 0.5$\mu$m, and more favorably not more than 0.1$\mu$m. In the case where the average diameter thereof is not more than 1$\mu$m, the laminated porous film is allowed to securely obtain its strength to some extent and can be preferably used as the separator for the battery. The average diameter of the porous film layer (layer A) can be measured by using a polymeter produced by Coulter Inc.

<Air Permeability>

0054 Regarding the upper limit of the air permeability of the porous film layer (layer A), the air permeability thereof is set to favorably not more than 5000 seconds/100ml, more favorably not more than 1000 seconds/100ml, and most favorably not more than 500 seconds/100ml. In the case where the air permeability of the porous film layer (layer A) is not more than 5000 seconds/100ml, pores of the porous film layer are allowed to be intercommunicable with one another to some extent. Thus the laminated porous film is capable of securely obtaining the air-permeable performance (that is, air permeability can be numerically decreased). For example, in the case where the laminated porous film having an air permeability of not more than 1000 seconds/100ml is used as the separator for the battery, it is possible to decrease the electric resistance thereof. Thus the laminated porous film can be preferably used as the separator for the battery. On the other hand, regarding the lower limit of the air permeability of the porous film layer (layer A), the air permeability thereof is set to favorably not less than 10 seconds/100ml, more favorably not less than 15 seconds/100ml, and most favorably not less than 20 seconds/100ml. In the case where the air permeability of the porous film layer (layer A) is not less than 10 seconds/100ml, the porous film layer (layer A) is capable of securely obtaining electric insulation.

[Layer Structure of Laminated Porous Film]

0055 The layer structure of the laminated porous film of the present invention is not limited to a specific one so long as the laminated porous film has the layer A and the layer B, both of which form the basic structure thereof. The laminated porous film may be composed of a single layer or a plurality of layers laminated one upon another so long as the layer A and the layer B have the demanded function.

0056 A two-kind two-layer structure consisting of the layer A/the layer B laminated one upon another is the simplest layer structure of the laminated porous film of the present invention. As the laminated porous film having the two-kind three-layer structure, it is possible to form a structure consisting of the layer A/the layer B/the layer A laminated one upon another and a structure consisting of the layer B/the layer A/the layer B laminated one upon another. From the standpoint of production, it is preferable to dispose the nonwoven cloth layer (layer B) at the outer layers. But any layer structure can be adopted for the laminated porous film so long as each layer perform its function and does not adversely affect properties of other layers of the laminated porous film. It is possible to increase the number of layers to four layers, five layers, six layers or seven layers as necessary.

0057 From the standpoint of improvement in the adhesiveness between layers, the laminated porous film is allowed to have a structure having an adhesive layer. It is possible to exemplify a structure consisting of the layer A/the adhesive layer/layer B laminated one upon another and a structure consisting of the layer B/the adhesive layer/the layer A/the adhesive layer/the layer B laminated one upon another.

[Thickness]

0058 The thickness of the laminated porous film of the present invention is set to favorably not less than 11μm, more favorably not less than 12μm, and most favorably not less than 15μm. Regarding the upper limit of the thickness of the laminated porous film, the thickness thereof is set to favorably not more than 100μm, more favorably not more than 80μm, and most favorably not more than 50μm.

In using the laminated porous film of the present invention as the separator for the battery, it is preferable to set the thickness thereof to 11μm to 50μm. By setting the thickness thereof to not less than 11μm, it is possible to sufficiently impart the SD property to the separator. By setting the thickness thereof to not more than 50μm, it is possible to improve the energy density of the battery.

0059 Regarding the thickness of each of the porous film layer (layer A) and the nonwoven cloth layer (layer B), the thickness of the porous film layer (layer A) is set to not less than 10μm. By setting the thickness of the porous film layer (layer A) to not less than 10μm, it is possible to obtain a sufficient molding processability and obtain a sufficient mechanical strength. In the case where the laminated porous film of the present invention is used as the separator for the battery, the thickness of the porous film layer (layer A) is set to not less than 10μm and preferably not less than 15μm. Regarding the upper limit of the thickness of the porous film layer (layer A), the thickness thereof is set to favorably less than 50μm, more favorably less than 40μm, and most favorably less than 30μm. By setting the thickness thereof to less than 50μm, it is possible to decrease the thickness of the laminated porous film of the present invention. Therefore it is possible to improve the energy density of the battery.

0060 On the other hand, the thickness of the nonwoven cloth layer (layer B) (in the case where the laminated porous film has not less than two layers B, the thickness of each of the layers B) is set to favorably not more than 10μm and more favorably not more than 7μm. In the case where the laminated porous film of the present invention is used as the separator for the battery, the nonwoven cloth layer (layer B) is capable of contributing to the improvement of the SD property. In the case where the thickness of the nonwoven cloth layer (layer B) is small, it is possible to allow the thickness of the laminated porous film to be small and improve the energy density of the battery. On the other hand, there is no restriction in the lower limit of the thickness of the nonwoven cloth layer (layer B) so long as the nonwoven cloth layer (layer B) displays the SD property. The thickness of the nonwoven cloth layer (layer B) is set to favorably not less than 1μm and more favorably not less than 2μm. By setting the thickness of the nonwoven cloth layer (layer B) to not less than 1μm, the nonwoven cloth layer (layer B) is capable of improving the SD property to a higher extent.

(Method of Producing Laminated Porous Film)

0061 One example of the method of producing the laminated porous film of the present invention is described below. But the production method of the present invention is not limited to the method described below.

0062 A method of producing the laminated porous film of the present invention having the simplest structure, namely, the two-kind two-layer structure consisting of the porous film layer (layer A) and the nonwoven cloth layer (layer B) laminated one upon another is described below.

As methods of laminating the porous film layer (layer A) and the nonwoven cloth layer (layer B) one upon another, in addition to a method of laminating films composing the two layers A and B one upon another or a method of laminating the films one upon another by bonding them to each other with an adhesive, a method of laminating the porous film layer (layer A) and the nonwoven cloth layer (layer B) one upon another by forming the nonwoven cloth layer (layer B) directly on the porous film layer (layer A) is exemplified. Of these methods, the method of laminating the porous film layer (layer A) and the nonwoven cloth layer (layer B) one upon another by forming the nonwoven cloth layer (layer B) directly on the porous film layer (layer A) is preferable because this method allows the production process to be simple and a high productivity to be achieved. Thus the method of laminating the porous film layer (layer A) and the nonwoven cloth layer (layer B) one upon another by forming the nonwoven cloth layer (layer B) directly on the porous film layer (layer A) is described below.

<Method of Producing Porous Film Layer (layer A)>

0063 As the form of the film for forming the porous film layer (layer A), namely, as the form of the film before forming the porous film layer (layer A), both a planar configuration and a tubular configuration can be used. But the planar configuration is preferable, considering that the planar configuration allows the productivity (property of allowing several films to be obtained in the width direction of an original sheet) of the film to be higher than the tubular configuration and the inner surface of the film to be coated.

0064 As the method of producing the planar film, it is possible to exemplify a method of producing a biaxially stretched film by carrying out the step of melting a raw resin by using an extruder, the step of extruding the molten resin from a T-die, the step of cooling it with a casting roll to solidify it, the step of longitudinally roll-stretching the solidified resin, the step of tenter-stretching it widthwise, and the step of annealing and cooling the tenter-stretched resin. It is also possible to adopt a method of producing the planar film by cutting open a film produced by using a tubular method.

0065 As methods of producing the film for forming the porous film layer (layer A), namely, as methods of producing the film having a porous structure, it is possible to list (1) a wet process of mixing a resin and a plasticizer with each other and melting the mixture to form an original sheet, and immersing the original sheet in a solvent to elute the plasticizer from a film, (2) a method of forming a porous film by greatly (high draft percentage) deforming a film in the operation of forming the film to form a crystal portion in the film, and thereafter performing multistage stretching at low to high temperatures to generate an interfacial separation between the crystal portion and an amorphous portion, (3) a filler method of forming a porous film by melting a mixture of a filler and a resin to form an original sheet and thereafter stretching the original sheet to generate an interfacial separation between the filler and the resin, (4) a method of forming a porous film by preparing an original sheet from a polypropylene resin composition to which a β crystal nucleating agent has been added in such a way that the polypropylene resin composition has the β activity and thereafter stretching the original sheet to transfer the β crystal to the α crystal, and other methods. Any of the above-described methods may be used to produce the film having the porous structure.

As a preferable example of the method of producing the porous film layer (layer A), description is made below on the method of making the original sheet porous by extruding the polypropylene resin composition to which the β crystal nucleating agent has been added by a T-die extrusion method in such a way that the polypropylene resin composition has the β activity and thereafter stretching the original sheet. But in the present invention, the method of producing the porous film layer (layer A) is not limited to this method.

0066 After the thermoplastic resin composition (a) composing the porous film layer (layer A) is kneaded by using a Henschel mixer, a super Henschel mixer or a tumbler-type mixer, the thermoplastic resin composition (a) is molten and kneaded by using a uniaxial extruder, a twin screw extruder or a kneader. Thereafter the thermoplastic resin composition (a) treated as described above is pelletized.

0067 After the obtained pellet of the thermoplastic resin composition (a) is supplied to an extruder, melt extrusion of the pellet of the resin composition (a) from a T-die is performed. As the kind of the T-die to be used, a single-layer type is exemplified. In the case where the laminated porous film has a lamination structure composed of the porous film layer (layer A) and other layers laminated one upon another, a multi type T-die for forming a film having the two-kind three-layer structure and a feed block type T-die for forming a film having the two-kind three-layer structure are exemplified.

Although the gap in the T-die to be used is determined according to various conditions such as an ultimately necessary thickness of the laminated porous sheet, a stretching condition, and a draft ratio, the gap in the T-die is set to favorably 0.1 to 3.0mm and more favorably 0.5 to 1.0mm. By setting the gap in the T-die to not less than 0.1mm, it is possible to secure a sufficient production speed. By setting the gap in the T-die to not more than 3.0mm, it is possible to secure sufficient production stability.

0068 The extrusion temperature in the extrusion molding is appropriately adjusted according to the crystalline melting peak temperature, flow property, and moldability of the resin composition. The extrusion temperature is set to temperatures higher than the crystalline melting peak temperature of the resin composition by favorably not less than 10°C nor more than 150°C and more favorably not less than 10°C nor more than 100°C. By setting the extrusion temperature to temperatures higher than the crystalline melting peak temperature thereof by not less than 10°C, the molten resin has a sufficiently low viscosity and thus a back pressure does not become high at the time of melt extrusion. Therefore an excellent moldability can be obtained, which is preferable. By setting the extrusion temperature to temperatures higher than the crystalline melting peak temperature of the resin composition by not more than 150°C, it is possible to restrain the resin composition from deteriorating and thus the mechanical strength of the obtained laminated porous film from deteriorating, which is preferable.

The temperature at which the resin composition is cooled to solidify it by using the casting roll is important in the case where the porous film layer (layer A) is allowed to have the β activity by adding the β crystal nucleating agent to the polypropylene resin composition. It is possible to generate and grow the β crystal of the polypropylene resin by setting an appropriate the temperature at which the resin composition is cooled to solidify it and adjust the ratio of the β crystal in the layer A.

In the case where the porous film layer (layer A) is allowed to have the β activity by adding the β crystal nucleating agent to the polypropylene resin composition, the temperature at which the resin composition is cooled to solidify it by using the casting roll is set to favorably 80°C to 150°C, more favorably 90°C to 140°C, and most favorably 100°C to 130°C. By setting the cooling temperature at which the resin composition is cooled to solidify it to not less than 80°C, it is possible to sufficiently increase the ratio of the β crystal in the layer A cooled to solidify it, which is preferable. By setting cooling temperature at which the resin composition is cooled to solidify it to not more than 150°C, a trouble that extruded molten resin adheres to the casting roll and twines around it is unlikely to occur. Thus it is possible to efficiently produce the film, which is preferable.

0069 By using the casting roll to the above-described temperature range, the rate of the β crystal of the polypropylene resin in the unstretched layer A is set to favorably 30 to 100%, more favorably 40 to 100%, and most favorably 60 to 100%. By setting the rate of the β crystal of the polypropylene resin in the unstretched layer A to not less than 30%, it is easy to make the layer A porous by a stretching operation to be performed at a later step. Thereby it is possible to obtain a film having an excellent air-permeable characteristic.

By using the differential scanning calorimeter, the rate of the β crystal in the unstretched layer A is computed from the following equation by using the detected crystalline melting heat amount ($\Delta Hm\alpha$) derived from the α crystal of the polypropylene resin and the detected crystalline melting heat amount ($\Delta Hm\beta$) derived from the β crystal of the polypropylene resin, when the temperature of the unstretched layer A is raised from 25°C to 240°C at a heating speed of 10°C/minute.

Rate (%) of β crystal = $[\Delta Hm\beta/(\Delta Hm\beta + \Delta Hm\alpha)] \times 100$ 0070 Thereafter the unstretched layer A is stretched uniaxially or biaxially. A uniaxial stretching method is carried out in the length direction of the layer A or in the width direction thereof. In biaxially stretching the layer A, simultaneous biaxial stretching or sequential biaxial stretching is performed. The sequential biaxial stretching is more favorable than the simultaneous biaxial stretching because the sequential biaxial stretching allows a stretching condition to be selected at each stretching step and the porous structure to be easily controlled. Stretching in a direction in which the sheet is received (flow direction of sheet) is called "stretching in the length direction", whereas stretching in the direction vertical to the length direction is called "stretching in the width direction".

0071 In the case where the sequential biaxial stretching is used, although it is necessary to appropriately select a stretching temperature according to the composition, crystalline melting peak temperature, and crystallization temperature of the resin composition to be used, the sequential biaxial stretching is preferable because it allows the porous structure to be controlled comparatively easily and the balance among other properties of the laminated porous film such as its mechanical strength and contraction coefficient to be taken easily.

The stretching temperature in stretching the unstretched layer A in the length direction is set to favorably 10°C to 130°C and more favorably 15°C to 125°C. The stretching ratio in the length direction is set to favorably 2 to 10 times and more favorably 3 to 8 times longer than the original length of the unstretched layer A. By stretching the unstretched layer A in the length direction within the above-described range, it is possible to restrain breakage thereof at a stretching time and generate a proper starting point of pores.

The stretching temperature in stretching the unstretched layer A in the width direction is set to favorably 80°C to 150°C, more favorably 85°C to 140°C, and most favorably 90°C to 130°C. The stretching ratio in the width direction is set to favorably 1.5 to 10 times, more favorably 1.8 to 8 times, and most favorably 2 to 8 times longer than the original length of the layer A. By stretching the unstretched layer A in the width direction within the above-described range, it is possible to moderately enlarge the starting point of the pores formed by stretching the unstretched layer A in the length direction and generate a fine porous structure.

The stretching speed at the stretching step is set to favorably 500 to 12000%/minute, more favorably 750 to 10000%/minute, and most favorably 1000 to 10000%/minute. By stretching the unstretched layer A at the stretching speed within the above-described range, it is possible to generate a fine porous structure without forming pores having a defect structure.

<Method of Producing Nonwoven Cloth Layer (layer B)>

0072 As an example of a preferable method of producing the nonwoven cloth layer (layer B), a method of producing the nonwoven cloth layer (layer B) by using an electrospinning method is described below.

0073 As one example of the method of producing the nonwoven cloth layer (layer B) by using the electrospinning method, it is possible to exemplify a method having the step of forming the nonwoven cloth layer (layer B) by spinning a polymeric solution prepared by dissolving (1) thermoplastic resin composition (b) in a solvent.

0074 The method of producing the nonwoven cloth layer (layer B) by using the electrospinning method is described in detail below.

(Step (1))

0075 To form the nonwoven cloth layer (layer B) by the electrospinning method, it is preferable that initially the thermoplastic resin composition (b) is dissolved in the solvent to prepare the polymeric solution.

As a solvent necessary for preparing the polymeric solution, it is preferable to use a solvent in which the thermoplastic resin composition (b) is sufficiently dissolved and which vaporizes at the step of spinning the polymeric solution into fibers by the electrospinning method and allows nonwoven cloth to be formed directly on a collection electrode. In view of the above, namely, from the standpoint of the solubility of the thermoplastic resin composition (b) in the solvent and handleability of the solvent, it is preferable to appropriately select the solvent.

0076 As examples of solvents for dissolving the thermoplastic resin composition (b) therein, acetone, chloroform, ethanol, propanol, isopropanol, methanol, toluene, tetrahydrofuran, benzene, benzyl alcohol, 1,4-dioxolan, carbon tetrachloride, cyclohexane, cyclohexanone, methylene chloride, phenol, pyridine, trichloroethane, formic acid, acetic acid, N,N-dimethylformamide, dimethylsulfoxide, ethylene carbonate, propylene carbonate, diethyl ether, dimethoxyethane, 1,3-dimethyl-2-imidazolidinone, dioxolane, ethyl methyl carbonate, methylformate, 3-methyloxaziridine-2-one, methyl propionate, methyltetrahydrofuran, sulfolane, N-methyl-2-pyrrolidone, dimethylformamide, dimethylacetamide, paraxylene, and cyclohexanone are listed.

These solvents may be used singly or as a mixed solvent consisting of a plurality of these solvents combined with each other. In the electrospinning method, the fiber diameter can be controlled by adjusting the viscosity of the solution and the vaporization speed of the solvent. Therefore it is preferable to combine a plurality of solvents with each other to adjust the viscosity of the solution and the vaporization speed of the solvent.

0077 The resin concentration of the thermoplastic resin composition (b) in the polymeric solution is set to favorably 0.01 to 10 mass%. In the case where the resin concentration is less than 0.01 mass%, the resin concentration is so low that there is a case in which it is difficult to perform spinning, which makes it difficult to form the nonwoven cloth. In the case where the resin concentration is more than 10 mass%, there may be a case in which the average of obtained fibers is large or the viscosity of the polymeric solution becomes high, which makes it difficult to perform electrospinning. The resin concentration is set to more favorably 0.01 to 5 mass% and most favorably 0.025 to 3 mass%.

0078 It is possible to adopt arbitrary methods of extracting the polymeric solution obtained as described above to an electric field. As an example of extraction methods, after the polymeric solution is supplied to a nozzle, the electric field is generated between the nozzle and the collection electrode to extract the polymeric solution from the nozzle by electrolysis and spin it into fibers. The diameter of the nozzle is set to preferably 0.1 to 2mm. The nozzle may be metallic or non-metallic. The metallic nozzle can be used as one of electrode.

0079 Exemplifying a method of generating the electric field between the electrodes, one electrode (collection electrode) is grounded to apply a high voltage between one electrode and the other electrode consisting of one piece or more. The target of the voltage to be applied between the electrodes is set to preferably 0.2 to 5kV/cm per the distance between the electrodes. By applying the voltage falling in the above-described range between the electrodes, it is possible to preferably spin the polymeric solution into fibers.

0080 It is preferable to set the temperature of the solution in spinning the polymeric solution into fibers to a temperature range in which the thermoplastic resin composition (b) is thermally decomposed. The temperature of the solution should be appropriately adjusted in the temperature range in which the polymeric solution does not undergo a phase separation. Although a relative humidity in spinning the polymeric solution into fibers is not specifically restricted, 10 to 70% is favorable to allow the electrospinning to be accomplished. The relative humidity is set to more favorably 20 to 60% and most favorably not more than 30%. By controlling a discharge period of time in spinning the polymeric solution into fibers, it is possible to control the thickness of the nonwoven cloth to be obtained and the weight thereof per unit area.

(Step (2))

0081 By setting the porous film layer (layer A) on a collection substrate and spinning the polymeric solution obtained at the step (1) into fibers toward the collection substrate, a fibrous substance is formed while the solvent is vaporizing. In this case, at the time point when the fibrous substance is collected on the porous film layer (layer A) set on the collection substrate, a piece of nonwoven cloth in which fiber diameter is not more than $1\mu m$ is formed.

In the case where the solvent vaporizes insufficiently before the fibrous substance is collected on the porous film layer (layer A), the polymeric solution may be spun into fibers in a decreased pressure or in an atmospheric temperature set to not less than the boiling point of the solvent.

Although the temperature at which the polymeric solution is spun into fibers depends on the vaporization behavior of the solvent and the viscosity of the solution, the temperature at which the polymeric solution is spun into fibers is set to favorably not less than 0°C, more favorably not less than 5°C, and most favorably not less than 10°C. On the other hand, regarding the upper limit of the temperature at which at which the polymeric solution is spun into fibers is set to favorably not more than 160°C, more favorably not more than 150°C, and most favorably not more than 130°C.

0082 In spinning the polymeric solution into fibers, it is possible to control the thickness of the nonwoven cloth layer (layer B) and the weight thereof per unit area by adjusting the distance between the electrodes, an electric charge amount, the intensity of the electric field, the dimension of the nozzle, the amount of the solution to be injected from the nozzle, the concentration of the solution, the atmospheric temperature, and the atmospheric moisture.

0083 In spinning the polymeric solution into fibers, it is possible to control the thickness of the nonwoven cloth layer (layer B) and the weight thereof per unit area by adjusting the distance between the electrodes, an electric charge amount, the intensity of the electric field, the dimension of the nozzle, the amount of the solution to be injected from the nozzle, the concentration of the solution, the atmospheric temperature, and the atmospheric moisture.

0084 The nonwoven cloth can be also obtained by carrying out a method similar to the above-described method except that the polymeric solution obtained at the step (1) is supplied to a bath and that a roll serving as the electrode is set in the bath. As the advantage of this method, because the roll is used as the electrode, a piece of wide nonwoven cloth can be efficiently produced.

0085 In the case where the layer B is formed directly on the layer A, a layer for bonding both layers to each other may be interposed between the layer A and the layer B as necessary when the degree of the force for fixing both layers to each other is low. In addition, pretreatment such as corona treatment may be performed on the layer A.

It is possible to roll-press the layer A and the layer B from the standpoint of the improvement in the adhesiveness therebetween and the improvement in the flatness of the layers A and B. In the case where a metallic roll is used, it is possible to exemplify a linear pressure of 30 to 400kg/cm. No problems occur even when the layers A and B are heated in a range in which the porous structure of the film and especially the air-permeable performance thereof are not adversely affected thereby. The layers A and B may be roll-pressed several times so long as the porous structure is not impaired thereby.

[Property of Laminated Porous Film]

0086 Various properties of the laminated porous film are described below.

<Air Permeability>

0087 The air permeability means the degree of difficulty in pass-through of air through the film in the thickness direction thereof and can be expressed in seconds it takes for air having a volume of 100 ml to pass through the film. Therefore the smaller is a numerical value of the air permeability, the more easily the air passes through the film. On the other hand, the larger is the numerical value of the air permeability, the more difficultly the air passes therethrough. That is, the smaller is the numerical value of the air permeability, the higher is intercommunicable property of the film in the thickness direction thereof. The larger is the numerical value of the air permeability, the lower is the intercommunicable property of the film in the thickness direction thereof. The intercommunicable property means the degree of connection among pores in the thickness direction of the film.

0088 When the laminated porous film has a low air permeability, the laminated porous film of the present invention is applicable to various uses. For example, when the laminated porous film having a low air permeability is used as the separator of a lithium-ion secondary battery, lithium ions are capable of moving easily, and thus the lithium-ion secondary battery has an excellent electrical performance, which is preferable.

From the above-described standpoint, it is important that the air permeability of the laminated porous film is 10 to 10000 seconds/100ml. The air permeability of the laminated porous film is set to favorably 10 to 3000 seconds/100 ml, more favorably 10 to 1000 seconds/100 ml, and most favorably 100 to 500 seconds/100 ml.

When the air permeability of the laminated porous film is not less than 10 seconds/100 ml, it can be evaluated that micropores are uniformly formed in the laminated porous film. When the air permeability thereof is not more than 10000 seconds/100 ml, the laminated porous film has an excellent intercommunicable property and hence an excellent air-permeable performance. In the case where the laminated porous film is used as the separator for the battery, it is preferable that the air permeability thereof is 10 to 1000 seconds/100ml.

<SD Property>

0089 In the case where the laminated porous film of the present invention is used as the separator for the battery, it is preferable that the laminated porous film displays the SD property at temperatures not less than 100°C. In other words, it is favorable that micropores close at temperatures not less than 100°C, more favorable that they close at temperatures not less than 110°C, and most favorable that they close at temperatures not less than 120°C. Regarding the upper limit of temperatures at which the SD property appears, it is favorable that the SD property appears at not more than 150°C, more favorable that it appears at not more than 145°C, and most favorable that it appears at not more than 140°C. When the battery having the separator consisting of the laminated porous film of the present invention is left in a car in summer, there is a possibility that the temperature inside the car may become nearly 100°C in dependence on a place. In this case, by setting the temperature at which the SD property appears to not less than 100°C, the separator is capable of restraining the function of the battery from deteriorating, which is preferable. On the other hand, by setting the temperature at which the SD property appears to not more than 150°C, the separator is capable of securing the safety of the battery. 0090 As a method of determining whether the SD property appears, it is possible to exemplify a method of examining the value of the ratio (AP1/AP2) of an air permeability (AP1) detected after heating the laminated porous film at a specific temperature for three minutes to an air permeability (AP2) before heating the laminated porous film. When the value of AP1/AP2 is not less than 10, it is possible to regard that the SD property has appeared, which is preferable. The value of AP1/AP2 is favorably not less than 20, more favorably not less than 30, and most favorably not less than 100. When the value of AP1/AP2 is not less than 10, the value of AP1 is large. That is, in this case, micropores are closed as a result of heating of the laminated porous film and thereby have become intercommunicable with each other to a low extent. Thus it is considered that the SD property has sufficiently appeared. 0091 In the case where the laminated porous film of the present invention is used as the separator for the battery, it is preferable to maintain the SD property in a temperature region higher than a temperature at which the SD property appears. By maintaining the SD property at temperatures higher than the temperature at which the SD property appears, it is possible to prevent positive and negative electrodes from directly contacting each other by isolating them from each other, even though the temperature inside the battery rises, which is effective for the safety of the battery.

0092 In order for the laminated porous film of the present invention to obtain the above-described SD property, it is important that the peak value of the crystalline melting temperature of the thermoplastic resin composition (b) which is the main component of the nonwoven cloth layer (layer B) is not less than 100°C and less than 150°C, as described above. When the peak value of the crystalline melting temperature of the thermoplastic resin composition (b) falls within the above-described temperature range, the micropores formed in the nonwoven cloth layer (layer B) are closed at high temperatures and thereby the SD property can be imparted to the laminated porous film to a proper degree in the case where the laminated porous film is used as the separator for the battery.

As the thermoplastic resin composition (a) which is the main component of the porous film layer (layer A), it is favorable to use a resin having the peak value of the crystalline melting temperature at not less than 150°C nor more than 250°C, more favorable to use a resin having the peak value thereof at not less than 160°C nor more than 250°C, and most favorable to use a resin having the peak value thereof at not less than 160°C nor more than 240°C. When the peak value of the crystalline melting temperature of the thermoplastic resin composition (a) which is the main component of the porous film layer (layer A) falls within the above-described temperature range, the laminated porous film is allowed to sufficiently maintain the original configuration thereof in a high temperature state, which is preferable.

Regarding the porous structure, it is preferable that the maximum diameter of pores of the porous film layer (layer A) is set as small as possible. Regarding the upper limit of the diameter of the pores, the diameter of pores thereof is favorably not more than 1μm and more favorably not more than 0.5μm.

<Porosity>

0093 The porosity of the laminated porous film of the present invention is set to favorably 5 to 80% and more favorably 20 to 70%. In the case where the porosity thereof is not less than 5%, the pores of the obtained porous film are intercommunicable with each other. In the case where the porosity thereof is not more than 80%, the obtained porous film has a sufficiently high mechanical strength.

0094 To determine the porosity, a substantial amount W1 of the film is measured, and a mass W0 is computed when the porosity is 0% from the density and thickness of the resin composition. From the value of the substantial amount W1 and that of the mass W0, the porosity can be determined based on an equation shown below.

$$\mathtt{Porosity\ Pb(\%)\ =\ \{(W0\ -\ W1)/W0\}\ \times\ 100}$$

(Description of Separator for Battery)

0095 A nonaqueous electrolytic solution battery accommodating the porous film of the present invention as the separator therefor is described below with reference to Fig. 1.

Both a positive electrode plate 21 and a negative electrode plate 22 are spirally wound in such a way that the positive electrode plate 21 and the negative electrode plate 22 are overlapped each other via a separator 10 for the battery. The outer side of the positive electrode plate 21 and that of the negative electrode plate 22 are fixed with a tape to obtain a body consisting of both electrode plates 21 and 22 and the separator 10 integrally wound. In spirally winding both electrode plates 21 and 22, the thickness of the separator 10 for the battery is set to favorably 3 to 100$\mu$m and especially favorably 5 to 80$\mu$m. By setting the thicknesses of the separator 10 for the battery to not less than 3$\mu$m, the separator 10 for the battery is unlikely to be broken. By setting the thickness thereof to not more than 100$\mu$m, it is possible to allow the area of the battery to be large in winding and accommodating both electrode plates 21 and 22 in a predetermined battery can and thus the capacity of the battery to be large.

0096 The body composed of the positive electrode plate 21, the separator 10 for the battery, and the negative electrode plate 22 integrally wound is accommodated inside a bottomed cylindrical battery case and welded to a positive lead 24 and a negative lead 25. Thereafter the electrolyte is injected into the battery can. After the electrolyte penetrates into the separator 10 sufficiently, the periphery of the opening of the battery can is sealed with a positive lid 27 via a gasket 26. Thereafter preparatory charge and aging are carried out to produce a cylindrical nonaqueous electrolytic solution battery.

0097 The electrolytic solution composed of an organic solvent in which a lithium salt is dissolved is used. Although the organic solvent is not limited to a specific kind, esters such as propylene carbonate, ethylene carbonate, butylene carbonate, $\gamma$-butyrolactone, $\gamma$-valerolactone, dimethyl carbonate, methyl propionate, and butyl acetate; nitriles such as acetonitrile; ethers such as 1,2-dimethoxyethane, 1,2-dimethoxymethane, dimethoxypropane, 1,3-dioxolane, tetrahydrofuran, 2-methyltetrahydrofuran, and 4-methyl-1,3-dioxofuran; and sulfolane are listed. These organic solvents can be used singly or in combination of not less than two kinds thereof. Above all, an electrolyte in which 1.0 mol/L of lithium phosphate hexafluoride (LiPF$_6$) is dissolved in a solvent in which two parts by mass of methyl ethyl carbonate is mixed with one part by mass of ethylene carbonate is preferable.

0098 As the negative electrode, an alkali metal or a compound, containing the alkali metal, which is integrated with a current collector such as a net made of stainless steel is used. As the alkali metal, lithium, sodium, and potassium are listed. As the compound containing the alkali metal, alloys of the alkali metal and aluminum, lead, indium, potassium, cadmium, tin or magnesium; compounds of the alkali metals and a carbon material; and compounds of the alkali metal having a low electric potential and metal oxides or sulfides are listed.

In using the carbon material for the negative electrode, it is possible to use those capable of doping or de-doping lithium ions. For example, it is possible to use graphite, pyrolytically decomposed carbons, cokes, glassy carbons, calcined organic polymeric compounds, mesocarbon microbeads, carbon fibers, and activated carbon.

0099 A negative electrode plate produced as follows is used as the negative electrode in this embodiment. A carbon material having an average particle diameter of 10$\mu$m is mixed with a solution in which vinylidene fluoride is dissolved in N-methylpyrrolidone to obtain a slurry. After the slurry, consisting of the mixture of the above-described substances, which forms the negative electrode is passed through a 70-mesh net to remove large particles, the slurry is uniformly applied to both surfaces of a negative current collector consisting of a belt-shaped copper foil having a thickness of 18$\mu$m and is dried. After the slurry is compression-molded by a roll press machine, the molding is cut to obtain the belt-shaped negative electrode plate.

0100 A molding produced as follows is used as the positive electrode. A metal oxide such as lithium cobalt oxide, lithium nickel oxide, lithium manganese oxide, manganese dioxide, vanadium pentoxide or chromium oxide and a metal sulfide such as molybdenum disulfide are used as the active substance of the positive electrode. A conductive assistant and a binding agent such as polytetrafluoroethylene are appropriately added to the positive active substance to obtain a combination of these substances. Thereafter the combination of these substances is processed into the molding by using a current collector such as stainless steel net as the core of the positive electrode. 0101 In this embodiment, as the positive electrode, a belt-shaped positive electrode plate produced as described below is used. That is, as a conductive assistant, scaly graphite is added to the lithium cobalt oxide (LiCoO$_2$) at a mass ratio of the lithium cobalt oxide : the scaly graphite = 90 : 5. Both substances are mixed with each other to form a mixture. The mixture and a solution in which the polyvinylidene fluoride is dissolved in the N-methylpyrrolidone are mixed with each other to obtain a slurry. After the slurry, consisting of the mixture of these substances, which forms the positive electrode is passed through the 70-mesh net to remove large particles, the slurry is uniformly applied to both surfaces of a positive current collector consisting of an aluminum foil having a thickness of 20$\mu$m and dried. After the slurry is compression-molded with the roll press machine, the molding is cut to obtain the belt-shaped positive electrode plate.

EXAMPLES

0102 Examples and comparison examples are shown below. Although the laminated porous film of the present invention is described in detail below, the present invention is not limited thereby. Various properties of the laminated porous film were measured and evaluated as described below. The direction in which the laminated porous film is received from an extruder is called the "length direction", whereas the direction vertical to the length direction is called the "width direction".

(1) Fiber Diameter

0103 The fiber diameters of unspecified 30 points of each of the nonwoven cloth layer (layer B) of the examples and the comparison examples were measured with a scanning electron microscope (S-4500 produced by Hitachi, Ltd.). The maximum fiber diameter of the measured 30 fiber diameters is shown as the fiber diameter of each nonwoven cloth layer (layer B) in table 1.

(2) Thickness of Laminated Porous Film

0104 The in-plane thickness of each laminated porous film was measured at unspecified 30 points thereof with a dial gauge of 1/1000mm. The average of the measured values of each laminated porous film is shown as the thickness thereof in table 1.

(3) Air Permeability (Gurley Value)

0105 The air permeability (second/100 ml) of each laminated porous film was measured in accordance with JIS P8117 (ISO 5636/5).

(4) Shut-Down Temperature (SD Temperature)

0106 The obtained laminated porous film (original film) of each of the examples and the comparison examples was cut square in the dimension of 60mm long × 60mm wide to measure the air permeability of each film obtained by cutting the original film before they were heated.

After each film obtained by cutting the original film was sandwiched between two aluminum plates where a hole having a diameter of Φ40mm was formed at a central portion, the periphery of the film was fixed with clips. Each film restrained by the two aluminum plates was put in an oven (Tabai gear oven "GPH200" produced by Tabai Espec Corporation, damper was kept closed) having a temperature set to every 5°C in the range from 100°C to 150°C, namely, 100°C, 105°C, 110°C, ·····. Each film was held for 3 minutes after the inside temperature of the oven reached each of the above-described set temperatures. After the film was taken out of the oven, the film restrained by the two aluminum plates was cooled for 30 minutes in an atmosphere of 25°C.

Thereafter the film was taken out of the aluminum plates to measure the air permeability of the circular hole, having the diameter of Φ40mm, which was formed at the central portion of each aluminum plate in conformity to JIS P8117 (ISO 5636/5) after the film was heated.

The lowest temperature of temperatures at which the air permeability of the film detected after the film was heat-treated at a high temperature became not less than 10 times that of the film detected before the film was heat-treated was set as a shut-down temperature.

(5) Uniformity (Nonuniformity of Appearance)

0107 The obtained laminated porous films (samples) of the examples and the comparison examples were visually checked to examine whether they were uniformly white.

Laminated porous films which were solid, namely, uniformly white were evaluated as "o", whereas those which were unsolid, namely, nonuniformly white were evaluated as "×". 0108 The β activity of each of the obtained laminated porous films of the examples and the comparison examples was evaluated as follows:

(6) Differential Scanning Calorimetry (DSC)

0109 By using a differential scanning calorimeter (DSC-7) produced by PerkinElmer Inc., the laminated porous film of each of the examples and the comparison examples was heated from 25°C up to 240°C at a heating speed of 10°C/minute and allowed to stand for one minute. Thereafter each laminated porous film was cooled from 240°C down to 25°C at a cooling speed of 10°C/minute and allowed to stand for one minute. Thereafter the laminated porous film was heated again from 25°C up to 240°C at the heating speed of 10°C/minute. When the laminated porous film was heated again, whether they had the β activity or not was evaluated as follows according to whether a peak was detected in the range of 145°C to 160°C which is the crystalline melting peak temperature (Tmβ) derived from the β crystal of the polypropylene.

o: Laminated porous films in which Tmβ was detected in the range of 145°C to 160°C (they had β crystal activity).

x: Laminated porous films in which Tmβ was not detected in the range of 145°C to 160°C (they did not have β crystal activity).

The activity of the laminated porous film having a weight of 10mg was measured in a nitrogen atmosphere.

(7) Wide-Angle X-Ray Diffraction Measurement (XRD)

0110 The obtained laminated porous film (original film) of each of the examples and the comparison examples was cut square in the dimension of 60mm long × 60mm wide. After each laminated porous film obtained by cutting the original film was sandwiched between a Teflon (registered trademark) film and an aluminum plate both of which had a circular hole, having a diameter of Φ40mm, which was formed at the central portion thereof, the periphery of each laminated porous film was fixed with clips.

Each film restrained by the two aluminum plates was put in a blow isothermal instrument (Model: DKN602 produced by Yamato Science Corporation) having a set temperature of 180°C and a display temperature of 180°C. After each film was allowed to stand therein for three minutes, the set temperature was altered to 100°C. Thereafter the film was gradually cooled down to 100°C for not less than 10 minutes. When the display temperature became 100°C, the film was taken out of the blow isothermal instrument. Thereafter the film was cooled for five minutes in an atmosphere having a temperature of 25°C with the film being restrained by the two aluminum plates. Thereafter wide-angle X-ray diffraction measurement was carried out on the film at the portion thereof disposed at the circular holes, of the aluminum plates, which had the diameter of Φ40mm and was formed at the central portion thereof.

- Wide-angle X-ray diffraction measuring apparatus: Model Number: XMP18A produced by Mac science Co., Ltd.
- X-ray source: CuK-$\alpha$ ray, output: 40kV, 200mA
- Scanning method: $2\theta/\theta$ scan, $2\theta$ range: 5° to 25°, scanning interval: 0.05°, scanning speed: 5°/minute

Obtained diffraction profiles were checked to evaluate whether the films had the $\beta$ activity according to whether a peak derived from a (300) surface of the $\beta$ crystal of the polypropylene was detected in the range of $2\theta$ = 16.0° to 16.5°.

o: Films in which the peak was detected in the range of $2\theta$ = 16.0° to 16.5° (films had the $\beta$ activity)

x: Films in which the peak was not detected in the range of $2\theta$ = 16.0° to 16.5° (films did not have the $\beta$ activity)

In the case where the film cannot be cut from the original film in the dimension of 60mm long × 60mm wide, a specimen may be prepared by placing the film at the circular hole, of the aluminum plates, which had the diameter of Φ40mm and was formed at the central portion thereof.

(Example 1)

0111 As the thermoplastic resin composition (a) composing the layer A, 0.2 parts by mass of 3,9-bis[4-(N-CyClohexylcarbamoyl)phenyl]-2,4,8,10-tetraoxaspiro[5.5] undecane was added as the $\beta$ crystal nucleating agent to 100 parts by mass of polypropylene resin (Prime Polypro "F300SV" produced by Prime Polymer Co., Ltd., MFR: 3.g/10 minutes). After the mixture of the above-described components was melted and kneaded at a temperature of 280°C by using a same-direction twin screw extruder produced by Toshiba Machine Co., Ltd. (diameter: Φ40mm, L/D: 32) to obtain a pellet-shaped resin composition A1.

After the resin composition A1 was extruded from a T-die at 200 °C for a single layer film by using an extruder, the resin composition A1 was cooled with a casting roll having a temperature of 123°C to solidify it. In this manner, a laminated unporous membrane material having a thickness of 180μm was obtained.

After the laminated unporous membrane material was stretched 4.0 times longer than its original length in its length direction at 10°C to 85°C by using a roll stretching machine, the laminated unporous membrane material was sequentially biaxially stretched 5.0 times longer than its original length at 140°C in its width direction by using a tenter stretching machine. In this manner, the porous film layer (layer A) having a thickness of 20μm was obtained.

As the thermoplastic resin composition (b) which composes the nonwoven cloth layer (layer B), ultra-high-molecular-weight polyethylene (HI-ZEX MILLION 630M produced by Mitsui Chemicals Co., Ltd.) was selected. A prepared solvent consisting of a mixture of 50 mass% of paraxylene and 50 mass% of cyclohexanone was stirred at 150°C to obtain an ultra-high-molecular-weight polyethylene solution having 0.025 mass% as an electrospinning solution.

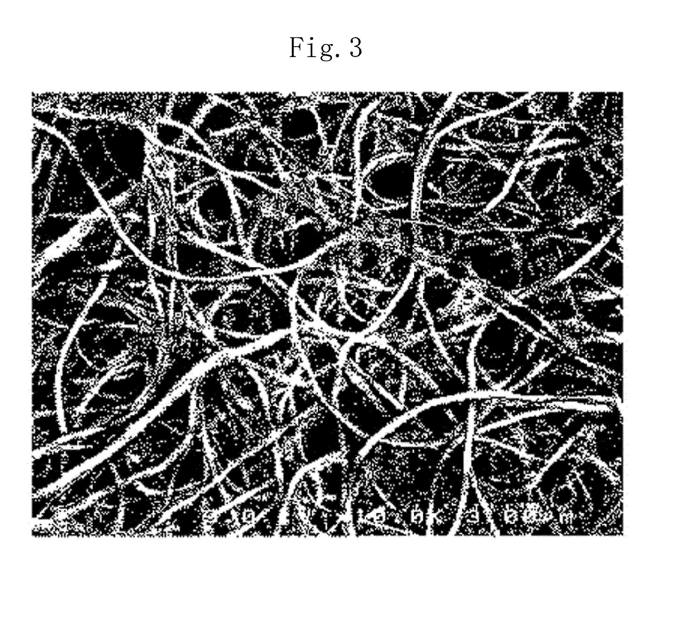

Thereafter the porous film layer (layer A) was set on a collection electrode. After the electrospinning solution was supplied to a nozzle (inner diameter of nozzle: Φ1mm, volume: 50cc) whose temperature was controlled to 150°C, electrospinning was carried out in conditions where a voltage applied to the nozzle was 40kV, and the distance between the nozzle and the collection electrode was 7cm. The porous film layer (layer A) and the nonwoven cloth layer (layer B) formed directly thereon was vacuum-dried at a room temperature to volatilize a remaining solvent. In this manner, a laminated porous film was produced. Fig. 3 shows an image of the surface of the obtained nonwoven cloth layer (layer B) observed by SEM.

(Example 2)

0112 A laminated porous film was produced by carrying out a method similar to that of the example 1 except that the concentration of the ultra-high-molecular-weight polyethylene solution selected as the thermoplastic resin composition (b) which composes the nonwoven cloth layer (layer B) was set to 0.001 mass%.

(Example 3)

0113 A laminated porous film was produced by carrying out a method similar to that of the example 1 except that high-density polyethylene (HI-ZEX3300F produced by Mitsui Chemicals Co., Ltd.) was selected as the thermoplastic resin composition (b) which composes the nonwoven cloth layer (layer B).

(Example 4)

0114 As the thermoplastic resin composition (a) which composes the layer A, a resin composition A1 was obtained by carrying out a method similar to that of the example 1. In addition, 30 parts by mass of a hydrogen additive (SEBS) of a styrene-butadiene-styrene triblock copolymer (SEPTON 8006 produced by Kuraray Co., Ltd, number average molecular weight: 200, 000, content of styrene: 33%, addition percentage of hydrogen: not less than 95%) serving as a soft component and 10 parts by mass of microcrystalline wax (Hi-Mic 1080 produced by Nippon Seiro Co., Ltd.) were added to 70 parts by mass of poly4-methyl-1-pentene polymer (TPX) (TPX RT18 produced by Mitsui Chemicals, Inc., MFR: 21g/10minutes [260°C, load of 5kg]). After the mixture of the above-described components was melted and kneaded at 270°C by using the same-direction twin screw extruder whose type is the same as that used in the example 1 to obtain a pellet-shaped resin composition A2.
After the resin compositions A1 and A2 were extruded at an extrusion temperature of 200°C and 255°C respectively by using different extruders, the resin compositions A1 and A2 were extruded at 255°C from a T-die for molding a resin composition into a multi-layer film through a feed block for forming a film having a two-kind three-layer structure. After the resin compositions A1 and A2 were laminated one upon another in such a way that the thickness ratio between the stretched resin compositions A1 and A2 was A1/A2/A1 = 3/1/3, the resin compositions A1 and A2 were cooled at 125°C to solidify them. In this manner a laminated unporous membrane material having a thickness of 110μm was obtained. After the laminated unporous membrane material was stretched 3.8 times longer than its original length in its length direction at 10°C to 120°C by using the roll stretching machine, the laminated unporous membrane material was sequentially biaxially stretched 2.0 times longer than its original width at 100°C in its width direction by using the tenter stretching machine. In this manner, the porous film layer (layer A) having a thickness of 47μm was obtained. A laminated porous film was produced by carrying out a method similar to that of example 1.

(Comparison Example 1)

0115 By carrying out a method similar to that of the example 1, a porous film, consisting of the porous film layer (layer A), which had a thickness of 20μm was produced without forming the nonwoven cloth layer (layer B) on the porous film layer (layer A) .

(Comparison Example 2)

0116 By carrying out a method similar to that of the example 4, a porous film, consisting of the porous film layer (layer A), which had a thickness of 47μm was produced without forming the nonwoven cloth layer (layer B) on the porous film layer (layer A).
Table 1
0117

| | | | Example1 | Example2 | Example3 | Example4 | Comparison example1 | Comparison example2 |
|---|---|---|---|---|---|---|---|---|
| LayerA | Crystalline melting peak temperature | °C | 171 | 171 | 171 | 171/241 | 171 | 171/241 |
| | Thickness | um | 20 | 20 | 20 | 47 | 20 | 47 |
| | Air permeability | second/100 ml | 520 | 520 | 520 | 382 | 520 | 382 |
| | Porosity | % | 52 | 52 | 52 | 52 | 52 | 52 |
| LayerB | Crystalline melting peak temperature | °C | 136 | 136 | 133 | 136 | - | - |
| | Diameter of fiber | um | 0.33 | 0.26 | 0.35 | 0.33 | - | - |
| Laminated porous film | Overall thickness | um | 22 | 22 | 22 | 49 | 20 | 47 |
| | Air permeability | second/100 ml | 567 | 553 | 573 | 433 | 520 | 382 |
| | SD temperature | °C | 135 | 135 | 135 | 135 | 165 | 235 |
| | Uniformity | - | ○ | ○ | ○ | ○ | - | - |
| | DSC | - | ○ | ○ | ○ | ○ | ○ | ○ |
| | XRD | - | ○ | ○ | ○ | ○ | ○ | ○ |

# EP 2 623 309 A1

0118 Table 1 indicates that each of the laminated porous films of the present invention has a favorable air-permeable characteristic. Further they have an excellent shut-down property because the shut-down temperatures thereof are 135°C. On the other hand, the laminated porous films of the comparative examples 1 and 2 in which the nonwoven cloth layer (layer B) was not formed did not have a practicable shut-down property because the shut-down temperatures thereof are 165°C and 235°C respectively.

INDUSTRIAL APPLICABILITY

0119 Because the laminated porous film of the present invention has an excellent air-permeable performance and an excellent shut-down property, the laminated porous film can be preferably utilized as the separator for a battery.

EXPLANATION OF REFERENCE SYMBOLS AND NUMERALS

0120

10: separator for battery
20: nonaqueous electrolytic solution secondary battery
21: positive electrode plate
22: negative electrode plate
24: positive lead
25: negative lead
26: gasket
27: positive lid
31: aluminum plate
32: film
33: clip
34: length direction of film
35: width direction of film

**Claims**

1. A laminated porous film comprising a porous film layer (layer A) which contains a thermoplastic resin composition

   (a) having a crystalline melting peak temperature of not less than 150°C nor more than 250°C as a main component thereof and which has a thickness not less than $10\mu$m and a nonwoven cloth layer (layer B) which contains a thermoplastic resin composition
   (b) having a crystalline melting peak temperature of not more than 100°C and less than 150°C as a main component thereof and which has a fiber diameter of not more than $1\mu$m;
   said laminated porous film having an air permeability of 10 to 10000 seconds/100ml.

2. A laminated porous film according to claim 1, wherein said thermoplastic resin composition (b) is polyethylene resin.

3. A laminated porous film according to claim 1 or 2, wherein said thermoplastic resin composition (a) is polypropylene resin composition.

4. A laminated porous film according to any one of claims 1 through 3, which has a $\beta$ activity.

5. A laminated porous film according to any one of claims 1 through 4, wherein a $\beta$ crystal nucleating agent is added to said thermoplastic resin composition (a).

6. A laminated porous film according to any one of claims 1 through 5, wherein a thickness of said nonwoven cloth layer (layer B) is less than $10\mu$m, and a shut-down temperature thereof is not less than 100°C nor more than 150°C.

7. A method of producing a laminated porous film according to any one of claims 1 through 6, wherein said nonwoven cloth layer (layer B) is formed on said porous film layer (layer A) by carrying out a nonwoven cloth production method (electrospinning method) in which a polymeric solution is prepared by dissolving said thermoplastic resin composition (b) in a solvent and thereafter said polymeric solution is spun into fibers by applying a voltage to said polymeric solution.

**8.** A separator for a battery in which a laminated porous film according to any one of claims 1 through 7 is used.

**9.** A battery in which a separator for a battery according to claim 8 is incorporated.

# Fig. 1

# Fig. 2A

60mm

60mm

1mm

40mm

31

32

31

# Fig. 2B

7mm

19mm

9.5mm

33

7mm

30mm

60mm

34

35

30mm

60mm

Fig.3

## INTERNATIONAL SEARCH REPORT

International application No.

PCT/JP2011/072367

A. CLASSIFICATION OF SUBJECT MATTER
*B32B5/24*(2006.01)i, *B32B27/32*(2006.01)i, *H01M2/16*(2006.01)i

According to International Patent Classification (IPC) or to both national classification and IPC

B. FIELDS SEARCHED

Minimum documentation searched (classification system followed by classification symbols)
B32B5/24, B32B27/32, H01M2/16

Documentation searched other than minimum documentation to the extent that such documents are included in the fields searched
Jitsuyo Shinan Koho         1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2008-311220 A  (Mitsubishi Plastics, Inc.), 25 December 2008 (25.12.2008), claims; paragraph [0070]; examples 9, 10 (Family: none) | 1-9 |
| Y | JP 2002-170540 A  (Tonen Tapyrus Co., Ltd.), 14 June 2002 (14.06.2002), claims & US 2002/0045091 A1 claims | 1-9 |
| Y | JP 2005-019026 A  (Japan Vilene Co., Ltd.), 20 January 2005 (20.01.2005), claims (Family: none) | 1-9 |

☐ Further documents are listed in the continuation of Box C.      ☐ See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    28 October, 2011 (28.10.11) | Date of mailing of the international search report<br>    08 November, 2011 (08.11.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2883726 B
- JP 2006264029 A
- JP 2002249966 A
- JP 2005019026 A
- JP 2006092829 A
- JP 3739481 B
- JP 2003306585 A
- JP 6289566 A
- JP 9194650 A

**Non-patent literature cited in the description**

- **A. ZAMBELLI et al.** *Macromol.,* 1975, vol. 8, 687